# EUROPÄISCHE PATENTSCHRIFT

(11) **EP 1 473 557 B1**
(45) Veröffentlichungstag und Bekanntmachung des Hinweises auf die Patenterteilung: **01.07.2009**
(21) Anmeldenummer: 03010052.3
(22) Anmeldetag: 02.05.2003
(51) Int. Cl.: G01M 5/00, G01L 5/00

(54) **Verfahren und Vorrichtung zur Biegeprüfung von Masten und ähnlich stehend verankerten Systemen**
Method and apparatus for checking the integrity of vertically anchored masts
Procédé et dispositif de contrôle de l'intégrité de pylônes ou autres structures verticales ancrées dans le sol

(43) Veröffentlichungstag der Anmeldung: 03.11.2004
(73) Patentinhaber: City Technologie GmbH, 23795 Bad Segeberg (DE)
(72) Erfinder: Giesener, Matthias, 22846 Norderstedt (DE)
(74) Vertreter: Vollmann, Heiko

(56) Entgegenhaltungen:
- EP-B- 0 638 794
- WO-A-98/25117
- DE-A- 10 146 332
- DE-U- 20 205 899

## Beschreibung

Die Erfindung betrifft ein Verfahren und eine Vorrichtung zum Prüfen eines Mastes, eine Antenne oder eines ähnlichen im oder auf dem Boden stehenden verankerten baulichen Systems, bei dem das Prüfobjekt mit einem Linearantrieb mit einer Kraft beaufschlagt wird und die Kraft mit einem Kraftsensor gemessen wird.

Mit einem solchen Verfahren und einer solchen Vorrichtung soll die Gebrauchstauglichkeit, Tragsicherheit und Lagesicherheit (Standsicherheit) vom im oder auf der Erdoberfläche stehenden verankerten baulichen Anlagen, wie Masten, Antennen und dergleichen sie darstellen, geprüft werden. Stehend verankerte Systeme wie Masten und Antennen werden zu vielerlei Zwecken eingesetzt. Masten beispielsweise als Träger von Beleuchtung, Verkehrsschildern, Ampeln, Freileitungen und Antennen für Funk und Sendeeinrichtungen, im wesentlichen in Bereichen, in denen diese Masten recht aggressiven Umwelteinflüssen wie Bodenfeuchtigkeit, Witterungseinflüssen, elektrischen Streuströmen, Emissionen aus Verkehr und Industrie, Streusalzen, Mähmaschinen, Rangiermanöver von PKW's, Vandalismus und vor allem dem böigen Winden ausgesetzt sind.

Diese Einflüsse können an den Masten zu Korrosion, Materialermüdung und Rissbildung und bei der Verankerung im Boden in z. B. Fundamenten zu Fundamentbruch oder Bodenerosion führen. Diese Schäden für sich allein oder in Akkumulation können zur Reduzierung der betrieblichen Nutzdauer und vom Verlust der Gebrauchstauglichkeit bis hin zum Verlust der Tragfähigkeit führen. Derartig angegriffene Masten bergen ein erhebliches Risiko für den öffentlichen Verkehr, da sie langsam bis urplötzlich abknicken und dadurch schwere Unfälle verursachen können. Um solchen Risiken vorzubeugen und um eine der betrieblichen Nutzung entsprechende Verwendung zu überprüfen, sollten die Masten in vorgegebenen Zeitintervallen auf ihre Gebrauchstauglichkeit und Tragfähigkeit (Standsicherheit) überprüft werden.

Bisher bekannte Verfahren zur Prüfung von Masten mittels Biegeprüfung haben sich in der Praxis kaum bewährt, da sie zu keinen einheitlichen Aussagen über den Zustand der Standsicherheit von Mastsystemen geführt haben. Das gemeinsame Problem der bekannten Mastbiegeprüfverfahren ist, daß die Aufzeichnung der Belastung bei der Prüfung unter Einbeziehung von mindestens zwei oder mehr Variablen erfolgen. Diese Variablen wie Kraft, Verschiebungswinkel, Auslenkung und Rückstellung des Prüfobjekts, welche mit der eingeleiteten Kraft ins Verhältnis gesetzt werden, verfälschen die tatsächlichen Werkstoff- und Einspannverhältnisse der Prüfobjekte.

Ein Verfahren zur Prüfung von Masten ist aus der DE-OS 15 73 752 bekannt. Bei diesem Verfahren findet ein Rahmengestell Verwendung, das sich durch eine am Mastfuß herumgelegten Schelle/Umlenkrolle kontert, um in ca. 1,00 m Höhe über einen hydraulischen Stempel eine Belastung in das System einbringt.

Dies bewirkt , daß der freistehende Mastteil gegenüber dem unterirdischen Mastfuß in Höhe der Schelle, gebogen wird, wobei die Einspannung nicht mit überprüft wird. Die Prüfung, ob der Mast auch einwandfrei ist, erfolgt dabei durch Vergleich der auftretenden Kräfte mit Daten, die über den entsprechenden Mast bekannt sind. Sind diese Daten nicht bekannt, so kann auch keine Aussage über die Stabilität gemacht werden. Es kann auch nur der untere Teil des Mastes direkt über dem Erdboden gemessen werden, da sonst das die Kraft ausübende Zahnstangengewinde oder dergleichen nicht mehr auf dem Erdboden stehen kann.

Bei dem vorbekannten Verfahren der DE 199 32 084 A1 wird zwar nur an einer Stelle eine Kraft auf den Mast ausgeübt, wobei die Höhe des Angriffspunktes auch geändert werden könnte. Es muß aber, um die Qualität des Mastes beurteilen zu können, die Durchbiegung mit Hilfe eines Lasers gemessen werden und dann die Qualität des Mastes aufgrund mehrerer Messungen und komplizierter Berechnungen bestimmt werden. Durch die mehrmalige einseitige Belastung des Mastes kommt es zur einer Lokkerung der Mastverankerung und einer Schädigung der Einbindung in einer Wirkungsrichtung.

Bei einem Verfahren der Eingangs genannten Art, das aus DE 94 04 664 U1 bekannt ist, werden unter Zuhilfenahme eines Minibaggers Masten in einer definierten Höhe mit einer horizontalen Einzelkraft belastet, die durch einen Linearantrieb bewirkt wird. Unter "Linearantrieb" wird in diesen Unterlagen dabei ein Antrieb mit gleichförmiger Geschwindigkeit verstanden. Mit einem Sensor wird dabei die ausgeübte Kraft gemessen, mit einem anderen Sensor die Auslenkung des Mastes. Das Verfahren und die Vorrichtung des Standes der Technik erfordern also zwei Sensoren, was eine Messung in unterschiedlichen Höhen sehr umständlich macht. Es müssen bei der Analyse sowohl die gemessene Kraft als auch die gemessene Auslenkung berücksichtigt werden.

Ähnlich verhält es sich auch bei Verfahren wie sie beispielsweise aus EP 0 638 794 B1 und WO 98/25117 bekannt sind. Diese dort beschriebenen Prüfverfahren benötigen einen Kraftsensor und einen Wegsensor um ein Kraft-Wegdiagramm zu erfassen anhand dessen ausgewertet werden kann, ob es sich um eine elastische oder plastische Verformung des Mastes handelt.

Das aus DE 20 205 899 U1 bekannte Verfahren arbeitet mit Wegsensoren und Druckfühlern um diese Zusammenhänge zu erfassen.

Insoweit günstiger ist zwar das aus DE 10 146 332 A1 bekannte Verfahren, doch können mit diesem die für die Mastsicherheitsprüfung notwendige Festigkeitswerte nicht ermittelt werden, sondern nur ein Biegemoment. Darüber hinaus benötigt dieses Verfahren zwei Linearantrieb.

Die Aufgabe der Erfindung besteht in der Schaffung eines Verfahrens und einer Vorrichtung, mit dem bzw. mit der Masten und dergleichen auf einfachere Weise zuverlässig überprüft werden können. Die erfindungsgemäße Lösung besteht darin, dass der Linearantrieb mit gleichförmiger Geschwindigkeit arbeitet und die zeitliche Änderung der Kraft bestimmt, angezeigt und/oder ausgewertet wird.

Durch den Linearantrieb wird in einer gewissen Höhe eine Kraft auf den Mast ausgeübt. Das entsprechende Stoß- oder Druckelement wird dabei mit dem linearantrieb mit gleichförmiger Geschwindigkeit gegen den Mast gedrückt. Je weiter der Linearantrieb das entsprechende Element gegen den Mast drückt, um so mehr wird dieser verformt, und um so mehr wächst die Reaktionskraft an, die mit dem Kraftsensor gemessen wird. Solange elastisches Verhalten des Mastes vorliegt, dieser also einwandfrei ist, wächst die Kraft linear mit der Zeit an, da das die Kraft auf den Mast ausübende Element ebenfalls zeitlich linear bewegt wird. Die Änderung der Reaktionskraft bzw. der Kraft, die auf den Mast ausgeübt wird, wird bestimmt, angezeigt und/oder ausgewertet. Ist die zeitliche Änderung linear, so ist dies ein Hinweis, dass der Mast einwandfrei ist. Ist die Änderung nicht linear oder beginnt sie, ab einer gewissen Kraftgröße nicht linear zu werden, so ist dies ein klarer Hinweis darauf, dass der Mast entweder nicht richtig im Boden verankert ist oder aber in sich fehlerhaft ist. Durch einfaches Beobachten des Anwachsend den Kraft mit der Zeit kann also festgestellt werden, ob der Mast einwandfrei ist oder nicht. Selbstverständlich wird dabei die Kraft nicht beliebig groß gewählt, sondern wird höchstens bis zu einem Wert anwachsen, der maximalen Belastungen entspricht, die z. B. durch Wind erzeugt werden.

Die Kraft, die auf den Mast ausgeübt wird, kann eine Druckkraft sein. Wird der Mast mit einer Schelle oder dergleichen umgeben, an der auch eine Zugkraft wirken kann, so kann auch die Zugkraft zur Prüfung des Mastes herangezogen werden. Welche dieser Kräfte verwendet wird, wird auch von der Hauptbelastungsrichtung äußerer Kräfte und der Zugänglichkeit des Mastes für das Messgerät abhängen. Es ist aber auch möglich, nacheinander eine Messung mit Druckkraft und Zugkraft durchzuführen, um so in zwei zueinander entgegengesetzten Richtungen die Stabilität und Qualität zu überprüfen.

Vorteilhafterweise erfolgt bei einem linearen zeitlichen Anwachsen der Kraft eine Meldung. Dabei kann bei überschreiten einer Toleranzgrenze der Nichtlinearität die Krafteinleitung beendet werden, damit der Mast nicht beschädigt, zerstört oder umgeworfen wird.

Eine Vorrichtung zum Prüfen eines Mastes zeichnet sich dadurch aus, dass ihr Linearantrieb mit gleichförmiger Geschwindigkeit betreibbar ist und sie Bestimmungs-, Anzeige- und/oder Auswertungseinrichtungen für die zeitliche Änderung der Kraft aufweist. Die Vorrichtung ist dabei zweckmäßigerweise auf einem Fahrzeug angeordnet, mit dem dann leicht an zu untersuchende Masten und dergleichen herangefahren werden kann. Zweckmäßigerweise ist die Vorrichtung dabei an einem Ausleger des Fahrzeugs angeordnet, so dass man mit dem Fahrzeug beliebig nahe an einen Mast heranfahren kann und das Messungen in unterschiedlichen Höhen erfolgen können.

Wenn die Vorrichtung ein den Mast umschließendes Element aufweist, kann nicht nur eine Druckkraft, sondern auch eine Zugkraft ausgeübt und ausgewertet werden. Ob man eine Zugkraft oder eine Druckkraft verwendet, wird auch von der geometrischen Zugänglichkeit des Mastes und den Hauptbelastungsrichtungen abhängen, denen der Mast normalerweise ausgesetzt ist. Es kann aber auch, wenn der Mast entsprechend zugänglich ist, die Belastung in zwei entgegengesetzten Richtungen in kurzer Zeit erfolgen, um in diesen beiden entgegengesetzten Richtungen die Qualität zu prüfen. Durch einfaches Versetzen der Vorrichtung bzw. des Fahrzeugs kann dann natürlich auch in den dazu senkrechten Richtungen oder in anderen Richtungen eine Messung erfolgen.

Zweckmäßigerweise wird der Linearantrieb mechanisch angetrieben. Es ist aber auch ein elektrischer Antrieb oder ein hydraulischer Antrieb möglich.

Der Vorteil des erfindungsgemäßen Verfahrens und der erfindungsgemäßen Vorrichtung besteht einmal darin, daß nur eine Variable gemessen werden muß, nämlich die Kraft, während beim Stand der Technik mehrere Variablen gemessen werden müssen. Dadurch vereinfacht sich der Prüfablauf, und es werden die messtechnischen Fehler vermieden, die durch die Anbringung spezieller Messsensoren am Mast entstanden sind. Diese werden durch Feuchtigkeit, Temperaturschwankungen, inhomogene Bodenverhältnisse, äußere Umwelteinflüsse usw. bewirkt. Das Kraft-Zeit-Diagramm ist frei von Überlagerungen in der Auswertung, so daß eine klare Ja-nein-Aussage zur Standsicherheitsbeurteilung des Mastes möglich ist. Eine weitere Verbesserung stellt die vor Ort durchzuführende Belastungsberechnung dar.

Mittels eines Windlastsimulationsprogramms wird die Belastung auf ein beliebiges Mastsystem nach den entsprechenden DIN Normen inklusiv seiner Anbauteile vor der Prüfung berechnet. Die berechnete Windlast plus eines Sicherheitsbeiwertes ergibt die zu erreichende Prüflast vor. Wesentlicher Vorteil dieses Verfahrens ist, daß die Ungenauigkeit bisheriger Prüfungen, die sich vergleichender Typenstatiken, Kataloge oder Erfahrungswerten bedient haben, sicher eliminiert werden. Damit wird zugleich eine Reproduzierbarkeit oder Belastungsannahmen sichergestellt.

Die Erfindung wird im folgenden anhand einer vorteilhaften Ausführungsform unter Bezugnahme auf die beigefügten Zeichnungen beispielsweise beschrieben. Es zeigen:
- Figur 1: in schematischer Darstellung eine erfindungsgemäße Vorrichtung, mit der ein Mast geprüft wird;
- Figur 2: das Kraft-Zeit-Diagramm eines einwandfreien Mastes; und
- Figur 3: das Kraft-Zeit-Diagramm eines fehlerhaften Mastes.

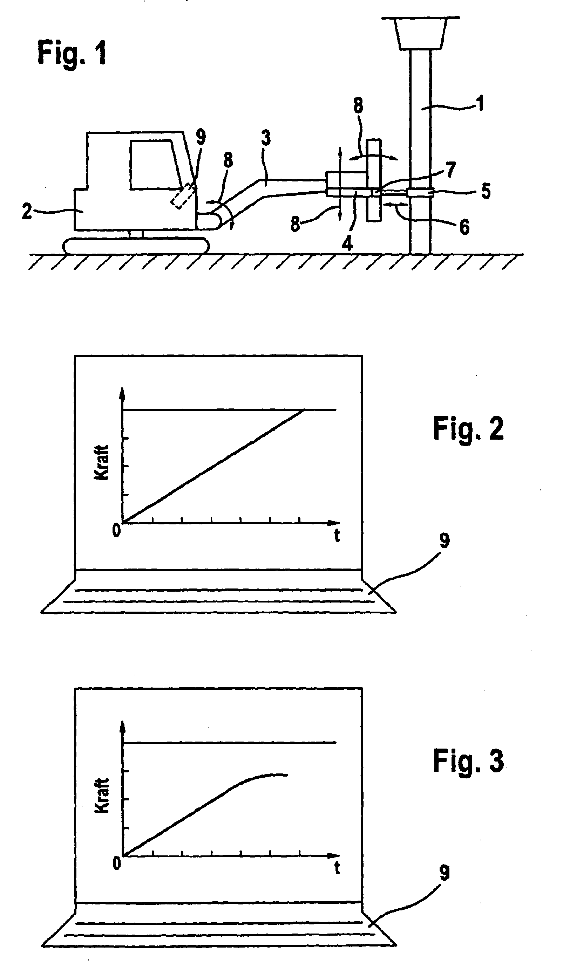

In Figur 1 ist ein Mast 1 gezeigt, der geprüft werden soll. Zu diesem Zweck wird ein Raupenfahrzeug 2 mit einem Ausleger 3 verwendet, an dem im vorderen Teil ein Linearantrieb 4 angeordnet ist, mit dem eine Kraft auf den Mast 1 ausgeübt werden kann. Zu diesem Zweck ist der Mast 1 mit einer Schelle 5 umgeben, so daß mit dem Linearantrieb 4 sowohl eine Druckkraft als auch eine Zugkraft ausgeübt werden kann. Diese Kräfte bzw. Bewegungen des Linearantriebes sind durch den Doppelpfeil 6 angedeutet. Zwischen dem Linearantrieb 4 und der Schelle 5 ist ein bei 7 angedeuteter Kraftsensor angeordnet. Der Ausleger 3 bzw. die Anordnung kann in Richtung der Doppelpfeile 8 verschwenkt bzw. angehoben oder abgesenkt werden, so daß Messungen an unterschiedlichen Stellen des Mastes 1 vorgenommen werden können. Bei 9 sind noch die Bestimmungs-, Anzeige- und/oder Auswertungseinrichtungen für die zeitliche Änderung der Kraft angedeutet.

Figur 2 zeigt das Kraft-Zeit-Diagramm eines einwandfreien Mastsystems. Da aufgrund des Linearantriebs eine linear anwachsende Verschiebung der Elemente, die am Mast 1 angreifen, und damit bei elastischem Mast 1 auch eine lineare Erhöhung der Gegenkraft auftritt, ist das Kraft-Zeit-Diagramm eines einwandfreien Mastsystems linear, wie dies in Figur 2 gezeigt ist.

Ist das Mastsystem nicht einwandfrei, z. B. ab einer gewissen Kraft, ab der dann der Mast nicht mehr elastisch nachgibt, so ist die Kurve nicht mehr linear, wie dies im oberen Teil der Kurve der Figur 3 gezeigt ist. Es liegt also ein Fehler des Mastsystems vor.

## Patentansprüche

1. Verfahren zum Prüfen eines Masts (1), einer Antenne und eines ähnlichen im oder auf dem Boden stehenden verankerten baulichen Systems, bei dem das Prüfobjekt (1) mit einem Linearantrieb (4) mit einer Kraft beaufschlagt wird und die Kraft mit einem Kraftsensor (7) gemessen wird, **dadurch gekennzeichnet, dass** der Linearantrieb (4) mit gleichförmiger Geschwindigkeit arbeitet und die zeitliche Änderung der Kraft bestimmt, angezeigt und/oder ausgewertet wird.

2. Verfahren nach Anspruch 1, **dadurch gekennzeichnet, dass** die Geschwindigkeit des Linearantriebs (4) wählbar ist.

3. Verfahren nach Anspruch 1 oder 2, **dadurch gekennzeichnet, dass** eine Druckkraft verwendet wird.

4. Verfahren nach Anspruch 1 oder 2, **dadurch gekennzeichnet, dass** eine Zugkraft verwendet wird.

5. Verfahren nach Anspruch 1 oder 2, **dadurch gekennzeichnet, dass** eine Druckkraft und eine Zugkraft verwendet wird.

6. Verfahren nach einem der Ansprüche 1 bis 4, **dadurch gekennzeichnet, dass** bei einem nichtlinearen zeitlichen Anwachsen der Kraft eine Meldung erfolgt.

7. Verfahren nach Anspruch 6, **dadurch gekennzeichnet, dass** bei Überschreiten einer Tolleranzgrenze der Nichtlinearität die Krafteinleitung beendet wird.

8. Verfahren nach einem der Ansprüche 1 bis 6, **dadurch gekennzeichnet, dass** bei linear zeitlichem Anwachsen der Kraft die Prüfung bis zur Prüflast durchgeführt wird.

9. Vorrichtung zum Prüfen eines Masts (1), einer Antenne oder eines ähnlichen im oder auf dem Boden stehenden verankerten Systems mit einem Linearantrieb (4), mit dem eine Kraft auf dem Mast, die Antenne oder das ähnliche System ausübbar ist, und mit einem Sensor (7) für die ausgeübte Kraft, **dadurch gekennzeichnet, dass** der Linearantrieb (4) mit gleichförmiger Geschwindigkeit betreibbar ist und dass sie Bestimmungs-, Anzeige- und/oder Auswerteeinrichtungen (9) für die zeitliche Änderung der Kraft aufweist.

10. Vorrichtung nach Anspruch 9, **dadurch gekennzeichnet, dass** sie auf einem Fahrzeug (2) angeordnet ist.

11. Vorrichtung nach Anspruch 10, **dadurch gekennzeichnet, dass** sie an einem Ausleger (3) des Fahrzeugs (2) angeordnet ist.

12. Vorrichtung nach einem der Ansprüche 9 bis 11, **dadurch gekennzeichnet, dass** sie ein den Mast (1) umschließendes Element (5) aufweist.

13. Vorrichtung nach einem der Ansprüche 9 bis 12, **dadurch gekennzeichnet, dass** der Linearantrieb (4) mechanisch angetrieben wird.

14. Vorrichtung nach einem der Ansprüche 9 bis 12, **dadurch gekennzeichnet, dass** der Linearantrieb (4) elektrisch angetrieben wird.

15. Vorrichtung nach einem der Ansprüche 9 bis 12, **dadurch gekennzeichnet, dass** der Linearantrieb (4) hydraulisch angetrieben wird.

16. Vorrichtung nach einem der Ansprüche 9 bis 15, **dadurch gekennzeichnet, dass** die Geschwindigkeit des Linearantriebs (4) wählbar ist.

## Claims

1. A method for testing a mast (1) of an antenna and a similar anchored structural system which stands in or on the ground, in the case of which the test object (1) is subjected to a force using a linear drive (4) and the force is measured using a force sensor (7), **characterized in that** the linear drive (4) operates at a constant speed and the change in the force over time is determined, displayed and/or evaluated.

2. The method according to Claim 1, **characterized in that** the speed of the linear drive (4) can be selected.

3. The method according to Claim 1 or 2, **characterized in that** a compressive force is used.

4. The method according to Claim 1 or 2, **characterized in that** a tensile force is used.

5. The method according to Claim 1 or 2, **characterized in that** a compressive force and a tensile force are used.

6. The method according to one of Claims 1 to 4, **characterized in that** in the event of a nonlinear growth in the force over time, a notification takes place.

7. The method according to Claim 6, **characterized in that** in the event of exceeding a tolerance limit for the nonlinearity, the introduction of force is ended.

8. The method according to one of Claims 1 to 6, **characterized in that** in the event of a linear growth in the force over time, the testing is carried out up to the test load.

9. A device for testing a mast (1) of an antenna or a similar anchored system which stands in or on the ground, with a linear drive (4), with which a force can be exerted on the mast, the antenna or the similar system, and with a sensor (7) for the force exerted, **characterized in that** the linear drive (4) can be operated at a constant speed, and **in that** the device has determination, display and/or evaluation apparatuses (9) for the change in the force over time.

10. The device according to Claim 9, **characterized in that** it is arranged on a vehicle (2).

11. The device according to Claim 10, **characterized in that** it is arranged on a boom (3) of the vehicle (2).

12. The device according to one of Claims 9 to 11, **characterized in that** it has an element (5) which encloses the mast (1).

13. The device according to one of Claims 9 to 12, **characterized in that** the linear drive (4) is driven mechanically.

14. The device according to one of Claims 9 to 12, **characterized in that** the linear drive (4) is driven electrically.

15. The device according to one of Claims 9 to 12, **characterized in that** the linear drive (4) is driven hydraulically.

16. The device according to one of Claims 9 to 15, **characterized in that** the speed of the linear drive (4) can be selected.

## Revendications

1. Procédé pour le contrôle d'un mât (1), d'une antenne et d'un système structurel similaire, ancré dans ou sur le sol en position dressée, selon lequel l'objet contrôlé (1) est soumis à la sollicitation d'une force, à l'aide d'un mécanisme d'entraînement linéaire (4), et la force est mesurée à l'aide d'un capteur de force (7), **caractérisé en ce que** le mécanisme d'entraînement linéaire (4) opère à vitesse uniforme et la variation dans le temps de la force est déterminée, affichée et/ou analysée.

2. Procédé selon la revendication 1, **caractérisé en ce que** la vitesse du mécanisme d'entraînement linéaire (4) est sélectionnable.

3. Procédé selon la revendication 1 ou 2, **caractérisé en ce qu'**une force de pression est employée.

4. Procédé selon la revendication 1 ou 2, **caractérisé en ce qu'**une force de traction est employée.

5. Procédé selon la revendication 1 ou 2, **caractérisé en ce qu'**une force de pression et une force de traction sont employées.

6. Procédé selon l'une des revendications 1 à 4, **caractérisé en ce que** dans le cas d'une croissance non linéaire dans le temps de la force, une signalisation se produit.

7. Procédé selon la revendication 6, **caractérisé en ce qu'**en cas de dépassement d'une limite de tolérance de la non-linéarité, il est mis fin à l'application de la force.

8. Procédé selon l'une des revendications 1 à 6, **caractérisé en ce qu'**en cas de croissance linéaire dans le temps de la force, l'opération de contrôle est réalisée jusqu'à la charge d'essai.

9. Dispositif pour le contrôle d'un mât (1), d'une antenne ou d'un système similaire, ancré dans ou sur le sol en position dressée, comprenant un mécanisme d'entraînement linéaire (4), à l'aide duquel une force peut être exercée sur le mât, l'antenne ou le système similaire, et un capteur (7) de la force exercée, **caractérisé en ce que** le mécanisme d'entraînement linéaire (4) peut être mis en fonctionnement à vitesse uniforme et **en ce que** le dispositif présente des structures (9) de détermination, d'affichage et/ou d'analyse de la variation dans le temps de la force.

10. Dispositif selon la revendication 9, **caractérisé en ce qu'**il est placé sur un véhicule (2).

11. Dispositif selon la revendication 10, **caractérisé en ce qu'**il est placé sur une flèche (3) du véhicule (2).

12. Dispositif selon l'une des revendications 9 à 11, **caractérisé en ce qu'**il présente un élément (5) enserrant le mât (1).

13. Dispositif selon l'une des revendications 9 à 12, **caractérisé en ce que** le mécanisme d'entraînement linéaire (4) est actionné mécaniquement.

14. Dispositif selon l'une des revendications 9 à 12, **caractérisé en ce que** le mécanisme d'entraînement linéaire (4) est actionné électriquement.

15. Dispositif selon l'une des revendications 9 à 12, **caractérisé en ce que** le mécanisme d'entraînement linéaire (4) est actionné hydrauliquement.

16. Dispositif selon l'une des revendications 9 à 15, **caractérisé en ce que** la vitesse du mécanisme d'entraînement linéaire (4) est sélectionnable.
